# EUROPEAN PATENT APPLICATION

(11) **EP 3 879 216 A1**
(43) Date of publication of application: **15.09.2021**
(21) Application number: 19872587.1
(22) Date of filing: 10.04.2019
(51) Int. Cl.: F27B 14/08, F27D 3/16, F23D 14/22

(54) **SIDE BLOWING LANCE FOR SMELTING FURNACE AND USE METHOD**

(30) Priority: 18.10.2018 CN 201811217326
(71) Applicant: Jiangsu New Chunxing Resource Recycling Co. Ltd, Pizhou, Jiangsu 221300 (CN)
(72) Inventor: YANG, Chunming, Pizhou, Jiangsu 221300 (CN); YANG, Dawei, Pizhou, Jiangsu 221300 (CN)
(74) Representative: von Tietzen und Hennig, Nikolaus
(86) International application number: PCT/CN2019/082104
(87) International publication number: WO 2020/077960

(57) **Abstract**

The present invention relates to a side blowing lance for a smelting furnace and a method of using same. A gas collection cylinder (1) of the side blowing lance includes a combustible gas chamber (3) and a compressed cooling air chamber (8) therein. A combustible gas inlet (2), an oxygen or oxygen-enriched air inlet (4), and a compressed cooling air inlet (7) are connected to the gas collection cylinder (1). The oxygen or oxygen-enriched air inlet (4) is located at one end of the gas collection cylinder (1). The combustible gas inlet (2) and the compressed cooling air inlet (7) are respectively connected at positions corresponding to the combustible gas chamber (3) and the compressed cooling air chamber (8). An oxygen or oxygen-enriched air pipe (5) extends inside a combustible gas pipe (6). The oxygen or oxygen-enriched air pipe (5) and the combustible gas pipe (6) both extend inside a compressed cooling air pipe (9). A gap exists between every two of the pipes. The oxygen or oxygen-enriched air pipe (5) extends through the gas collection cylinder (1) and is connected to the gas collection cylinder (1) at the oxygen or oxygen-enriched air inlet (4), and is in communication with the oxygen or oxygen-enriched air inlet (4). The combustible gas pipe (6) extends through the gas collection cylinder (1) and is connected to a partition between the combustible gas chamber (3) and the compressed cooling air chamber (8). The compressed cooling air pipe (9) is connected to a lowermost end of the gas collection cylinder (1). An other end of the gas collection cylinder (1) is an output end of the side blowing lance.

## Description

### Technical Field

The present invention relates to a side blowing lance and a method of using the same, and particularly to a side blowing lance for a smelting furnace and a method of using the same.

### Background

After more than 20 years of development, the side-blowing bath smelting technology has become a novel mature smelting process with mature and reliable technology, high efficiency and low energy consumption, strong adaptability to raw materials, environmental protection and outstanding economic benefits. In particular, this technology has the advantages of simple process, convenient operation, large capacity, and low investment, and has been widely promoted and applied in China.

Chinese Patent No. 2008102246301 entitled "Lance of side blowing converter for smelting non-ferrous metal" discloses "a lance body with a sleeve structure and a lance head at the front end of the lance body; a central pipeline of the sleeve structure is provided with a connecting interface connected with a fuel conveyor; a sandwich ring channel of the sleeve structure is provided with a connecting interface connected with combustion-supporting gas, characterized in that the lance head is provided with a fuel nozzle which is matched with the central pipeline and a combustion-supporting gas nozzle which is matched with the sandwich ring channel, and the combustion-supporting gas nozzle is provided with a through-hole nozzle array", "the lance body and the lance head are provided therein with cooling water channels", and "the outer peripheral surface of the part of the lance body and the lance head which is located inside the smelting furnace is provided with a refractory material layer." The lance body and the lance head are provided therein with cooling water channels, which can lower the temperature of the lance body and the lance head. The outer peripheral surface of the part of the lance body and the lance head which is located inside the smelting furnace is provided with a refractory material layer.

The cooling water channels of the side blowing lance are filled with a cooling medium. The cooling medium is water or oil. The side blowing lance is generally arranged below the slag surface of the smelting material in the smelting furnace, to provide better combustion and stirring effects. A plurality of lances are arranged on the side blowing converter for smelting non-ferrous metal, so improve the efficiency and quality of smelting. However, once the supply of the cooling medium in the side blowing lance is cut off or the cooling medium leaks, a furnace explosion is likely to occur, causing production safety accidents.

The use environment of the lance is very harsh. The lance has to withstand high-temperature melting loss in the furnace, slag erosion, chemical corrosion, frequent and great temperature changes, as well as the damage caused by mechanical collision during transportation and lifting. For a long time, the actual service life of the lance used in the factory is very short. The service life of the lance directly affects the smelting intensity of the furnace and the production costs, and is directly related to the smoothness of the production process. The short service life of the lance leads to high production costs and poor continuity of the production process. Therefore, it is of great importance to improve the service life and safety of the lance.

### Summary

An object of the present invention is to provide a side blowing lance for a smelting furnace and a method of using the same, to solve the problems of short service life, being prone to be damaged during smelting, and poor safety performance of the lance.

The technical solutions of the present invention are implemented by a side blowing lance and a method of using the side blowing lance.

The side blowing lance includes a gas collection cylinder, a combustible gas inlet, a combustible gas chamber, an oxygen or oxygen-enriched air inlet, an oxygen or oxygen-enriched air pipe, a combustible gas pipe, a compressed cooling air inlet, a compressed cooling air chamber, and a compressed cooling air pipe, where the gas collection cylinder includes a combustible gas chamber and a compressed cooling air chamber therein; the combustible gas inlet, the oxygen or oxygen-enriched air inlet, and the compressed cooling air inlet are connected to the gas collection cylinder, the oxygen or oxygen-enriched air inlet is located at one end of the gas collection cylinder, and the combustible gas inlet and the compressed cooling air inlet are respectively connected at positions corresponding to the combustible gas chamber and the compressed cooling air chamber; the oxygen or oxygen-enriched air pipe extends inside the combustible gas pipe, the oxygen or oxygen-enriched air pipe and the combustible gas pipe both extend inside the compressed cooling air pipe, and a gap exists between every two of the pipes; the oxygen or oxygen-enriched air pipe extends through the gas collection cylinder and is connected to the gas collection cylinder at the oxygen or oxygen-enriched air inlet, and is in communication with the oxygen or oxygen-enriched air inlet; the combustible gas pipe extends through the gas collection cylinder and is connected to a partition between the combustible gas chamber and the compressed cooling air chamber; the compressed cooling air pipe is connected to a lowermost end of the gas collection cylinder; and an other end of the gas collection cylinder is an output end of the side blowing lance.

The gas collection cylinder is a closed cylinder, one partition in the cylinder divides the cylinder into two chambers, i.e. the combustible gas chamber and the compressed cooling air chamber, and two ends of the cylinder and the partition are respectively provided with concentric through-holes with gradually increasing diameters; and the two chambers are each provided with an inlet hole.

Each of the oxygen or oxygen-enriched air pipe and the combustible gas pipe is provided with outlet grooves on an outer wall at an output end thereof.

The outlet grooves are uniformly distributed radially on the outer wall and form a gas passage with an inner wall of a neighboring pipe, the outlet grooves each have a length of 200-400 mm, and the outlet grooves each have a rectangular, trapezoidal, or semicircular cross-section.

An angle between the side blowing lance and a furnace wall of the smelting furnace is 30-70°.

A side blowing lance slot is located at a height of 200-1500 mm from a slag surface of the smelting furnace.

The method of using the side blowing lance includes the following steps:
(1) separately connecting an adjusting valve for the compressed cooling air inlet, an adjusting valve for the oxygen or oxygen-enriched air inlet, and an adjusting valve for the combustible gas inlet, placing the side blowing lance into the side blowing lance slot of the smelting furnace, and opening the adjusting valve for the compressed cooling air inlet;
(2) performing a slag splashing operation on the side blowing lance;
(3) inserting the slag-splashed side blowing lance into a slag bath, and adjusting an insertion depth of the side blowing lance to be 100-300 mm based on a slag layer thickness;
(4) automatically opening oxygen, natural gas, and compressed cooling air valves in turn, and performing adjustment to reach corresponding flow rates and pressures; and
(5) after single-furnace smelting is completed, lifting the side blowing lance outward through an automatic conveyor frame, and when a mouth of the side blowing lance reaches the furnace wall of the smelting furnace, closing the natural gas, oxygen, and compressed cooling air valves in turn, and removing the side blowing lance.

In the step (2), the slag splashing operation is performed by: first, determining a height of a surface of the slag bath, inserting the side blowing lance from above the slag surface of the smelting furnace, opening the adjusting valve for the oxygen or oxygen-enriched air inlet on the side blowing lance to an opening of 20-30%, opening the adjusting valve for the combustible gas inlet to an opening of 20-30%, maintaining a slight negative pressure in a furnace chamber of the smelting furnace, then moving the side blowing lance to a position which is 20-200 mm above the slag bath, and keeping for at least 90s; directly injecting an air flow from the side blowing lance onto the surface of the slag bath to cause fine slag particles to be splashed in the smelting furnace, so that the fine slag particles are splashed onto a surface of the side blowing lance and after being cooled by the air flow from the side blowing lance, gradually form a layer of condensed slag on the surface of the side blowing lance; and repeating the process several times to complete the slag splashing operation on the side blowing lance, where the slag splashing operation performed on the side blowing lance is to form the layer of the condensed slag on the surface of the side blowing lance to protect the side blowing lance and ensure safe operation of the side blowing lance during blowing and smelting.

In the step (4), the pressures and flow rates of compressed cooling air, oxygen or oxygen-enriched air, and combustible gas in the side blowing lance are respectively adjusted through the adjusting valves, to obtain an oxidation or a reduction atmosphere in different smelting phases, where the pressure of the compressed cooling air is 0.2-0.4 Mpa, the pressure of the oxygen or oxygen-enriched air is 0.2-0.3 Mpa, and the pressure of the combustible gas is 0.15-0.25 Mpa.

In the step (5), the side blowing lance is lifted, the adjusting valve for the combustible gas inlet and the adjusting valve for the oxygen or oxygen-enriched air inlet are closed to an opening of 20-30%, and at this moment, a normal negative pressure is maintained in the smelting furnace, then the side blowing lance is lifted to a stop position, and the adjusting valve for the compressed cooling air inlet, the adjusting valve for the oxygen or oxygen-enriched air inlet, and the adjusting valve for the combustible gas inlet are closed; and if the side blowing lance needs to be lifted out of a mouth of the smelting furnace, the slag splashed on the mouth of the side blowing lance is checked and cleaned.

Beneficial effects: With the adoption of the above solutions, the side blowing lance is a core technical device for side-blowing bath smelting. In the normal production of the converting furnace, the side blowing lance of the present invention is inserted into the smelting furnace through the lance slot above the slag surface of the smelting furnace, the lance head of the side blowing lance is immersed into the slag bath by 100-300 mm, and the air or oxygen-enriched air mixed with the fuel is injected into the bath, to cause a vortex of the molten melt in the smelting furnace. After the air or oxygen-enriched air enters the melt, a large number of dispersed bubbles are formed. Due to the dispersed bubbles in the melt and the vortex of the melt, the heat transfer and mass transfer process is accelerated, thereby improving the smelting efficiency.

The lance head of the side blowing lance is provided with a compressed cooling air outlet, an oxygen or oxygen-enriched air outlet, and a combustible gas outlet. The compressed cooling air outlet is located at the outermost layer. The compressed cooling air enters the compressed cooling air chamber through a compressed cooling air channel. The compressed cooling air introduced is buffered by the compressed cooling air chamber, which further ensures that the compressed cooling air injected continuously and stably cools the side blowing lance, to protect the surface of the lance head of the lance which is in direct contact with the slag layer inside the smelting furnace from being melted and oxidized at high temperature, thereby significantly improving the service life of the lance body and the lance head. Meanwhile, the compressed cooling air can also aid in the combustion of air, and cause a vortex of the molten melt in the smelting furnace. The oxygen or oxygen-enriched air outlet is located at the innermost layer. The oxygen or oxygen-enriched air injected into the smelting furnace forms a large number of dispersed bubbles, to ensure a better combustion effect of the fuel, and to better stir the molten melt in the fuel combustion region. The combustible gas outlet is located between the compressed cooling air outlet and the oxygen or oxygen-enriched air outlet. The combustible gas enters the combustible gas chamber through the combustible gas inlet. The combustible gas chamber provides a good buffering effect for the combustible gas introduced therein, to further ensure a continuous and stable supply of the combustible gas, accelerate the redox reaction in the smelting furnace, and completely destroy the conditions for explosion after the gas and oxygen are mixed in the smelting furnace, thereby solving the problems of short service life, being prone to be damaged during smelting, and poor safety performance of the lance, and achieving the object of the present invention.

Advantages:
1. The present invention features a simple structure, requires low costs, and is applicable to various furnace types.
2. The bath has strong stirring power, good smelting effect, and low energy consumption.
3. The use of air cooling provides high safety performance, which ensures effective slag splashing for the lance before each immersion and blowing, achieving a long service life of the lance.
4. The lance is inserted from the upper layer of the slag without a copper water jacket, which is safer to use. The insertion depth can be automatically adjusted as needed. The furnace wall is not corroded during blowing, which effectively protects the furnace body and prolongs the service life of the smelting furnace.
5. The operation is convenient and flexible, and the usage of the lance can be observed in real time, and it can be overhauled at any time.
5. The present invention is convenient to operate, and the use of the lance can be observed in real time, allowing for timely maintenance.

### Brief Description of the Drawings

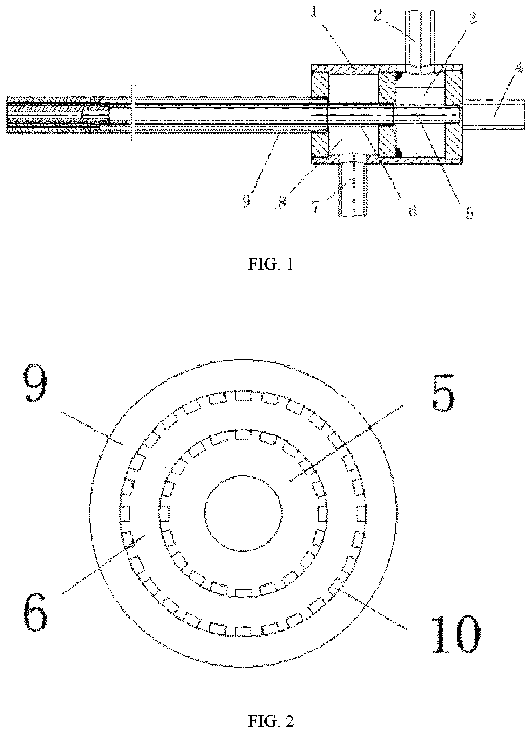

FIG. 1 is a structural view of the present invention.
FIG. 2 is a structural left view of an output end in FIG. 1.

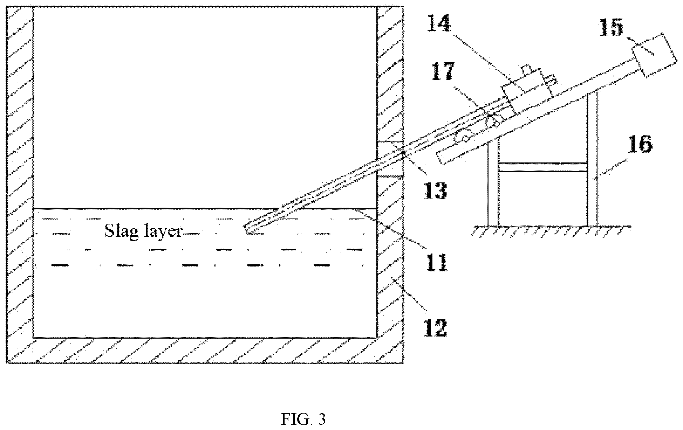

FIG. 3 is a structural view showing a use state of a side blowing lance according to Embodiment 1 of the present invention.

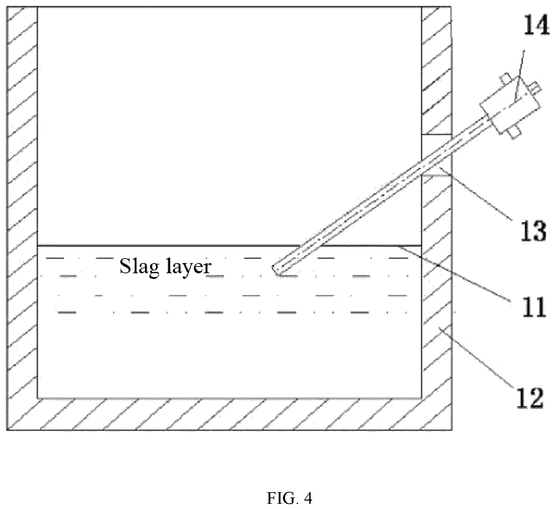

FIG. 4 is a structural view showing a use state of a side blowing lance according to Embodiment 2 of the present invention.

In the figures, 1, gas collection cylinder; 2, combustible gas inlet; 3, combustible gas chamber; 4, oxygen or oxygen-enriched air inlet; 5, oxygen or oxygen-enriched air pipe; 6, combustible gas pipe; 7, compressed cooling air inlet; 8, compressed cooling air chamber; 9, compressed cooling air pipe; 10, outlet groove; 11, slag surface; 12, furnace wall; 13, lance slot; 14, side blowing lance; 15, walking motor; 16, frame; 17, slideway.

### Detailed Description of the Embodiments

The technical solutions of the present invention will be further described below in conjunction with the accompanying drawings.

Embodiment 1: including a side blowing lance and a method of using the side blowing lance.

The side blowing lance includes a gas collection cylinder 1, a combustible gas inlet 2, a combustible gas chamber 3, an oxygen or oxygen-enriched air inlet 4, an oxygen or oxygen-enriched air pipe 5, a combustible gas pipe 6, a compressed cooling air inlet 7, a compressed cooling air chamber 8, and a compressed cooling air pipe 9. The gas collection cylinder 1 includes a combustible gas chamber 3 and a compressed cooling air chamber 8 therein. The combustible gas inlet 2, the oxygen or oxygen-enriched air inlet 4, and the compressed cooling air inlet 7 are connected to the gas collection cylinder. The oxygen or oxygen-enriched air inlet 4 is located at one end of the gas collection cylinder 1, and the combustible gas inlet 2 and the compressed cooling air inlet 7 are respectively connected at positions corresponding to the combustible gas chamber 3 and the compressed cooling air chamber 8. The oxygen or oxygen-enriched air pipe 5 extends inside the combustible gas pipe 6. The oxygen or oxygen-enriched air pipe 5 and the combustible gas pipe 6 both extend inside the compressed cooling air pipe 9, and a gap exists between every two of the pipes. The oxygen or oxygen-enriched air pipe 5 extends through the gas collection cylinder 1 and is connected to the gas collection cylinder 1 at the oxygen or oxygen-enriched air inlet 4, and is in communication with the oxygen or oxygen-enriched air inlet 4. The combustible gas pipe 6 extends through the gas collection cylinder 1 and is connected to a partition between the combustible gas chamber 3 and the compressed cooling air chamber 8. The compressed cooling air pipe 9 is connected to a lowermost end of the gas collection cylinder 1, and an other end of the gas collection cylinder is an output end of the side blowing lance.

The gas collection cylinder is a closed cylinder, the partition in the cylinder divides the cylinder into two chambers, i.e. the combustible gas chamber and the compressed cooling air chamber, and two ends of the cylinder and the partition are respectively provided with concentric through-holes with gradually increasing diameters; and the two chambers are each provided with an inlet hole.

Each of the oxygen or oxygen-enriched air pipe 5 and the combustible gas pipe 6 is provided with outlet grooves 10 on an outer wall at an output end thereof.

The outlet grooves 10 are uniformly distributed radially on the outer wall and form a gas passage with an inner wall of a neighboring pipe, the outlet grooves each have a length of 200-400 mm, and the outlet grooves each have a rectangular, trapezoidal, or semicircular cross-section.

An angle between the side blowing lance 14 and the furnace wall of the smelting furnace 12 is 30-70°.

The side blowing lance slot 13 is located at a height of 200-1500 mm from a slag surface 11 of the smelting furnace.

The automatic conveyor frame includes a walking motor 15, a frame 16, and a slideway 17. The slideway 17 is connected to the frame 16, the walking motor 15 is connected to an upper end of the slideway 17, and the side blowing lance is arranged on the slideway. When the walking motor 15 operates, the side blowing lance is lifted up or pushed down.

The method of using the side blowing lance includes the following steps.
(1) An adjusting valve for the compressed cooling air inlet, an adjusting valve for the oxygen or oxygen-enriched air inlet, and an adjusting valve for the combustible gas inlet are connected separately, the lance is placed into the lance slot of the smelting furnace, and the adjusting valve for the compressed cooling air inlet is opened.
(2) A slag splashing operation is performed on the lance.
(3) The slag-splashed lance is inserted into a slag bath, and an insertion depth of the lance is adjusted to be 100-300 mm based on the slag layer thickness.
(4) The oxygen, natural gas, and compressed cooling air valves are automatically opened in turn, and are adjusted to reach corresponding flow rates and pressures.
(5) After single-furnace smelting is completed, the lance is lifted outward through the automatic conveyor frame, and when a mouth of the lance reaches the furnace wall of the smelting furnace, the natural gas, oxygen, and compressed cooling air valves are closed in turn, and the lance is removed.

In the step (2), the slag splashing operation is performed by: first, determining a height of the surface of the slag bath, inserting the lance from above the slag surface of the smelting furnace, opening the adjusting valve for the oxygen or oxygen-enriched air inlet on the lance to an opening of 20-30%, opening the adjusting valve for the combustible gas inlet to an opening of 20-30%, maintaining a slight negative pressure in the furnace chamber, then moving the lance to a position which is 20-200 mm above the slag bath, and keeping for at least 90s; directly injecting an air flow from the lance onto the surface of the slag bath, to cause fine slag particles to be splashed in the furnace, so that the fine slag particles are splashed onto the surface of the lance and after being cooled by the air flow from the lance, gradually form a layer of condensed slag on the surface of the lance; and repeating the process several times to complete the slag splashing operation on the lance, where the slag splashing operation performed on the lance is to form the layer of the condensed slag on the surface of the lance to protect the lance and ensure safe operation of the lance during blowing.

In the step (4), the pressures and flow rates of compressed cooling air, oxygen or oxygen-enriched air, and combustible gas in the lance are respectively adjusted through the adjusting valves to obtain an oxidation or a reduction atmosphere in different smelting phases, where the pressure of the compressed cooling air is 0.2-0.4 Mpa, the pressure of the oxygen or oxygen-enriched air is 0.2-0.3 Mpa, and the pressure of the combustible gas is 0.15-0.25 Mpa.

In the step (5), the lance is lifted, the adjusting valve for the combustible gas inlet and the adjusting valve for the oxygen or oxygen-enriched air inlet are closed to an opening of 20-30%, and at this moment, a normal negative pressure is maintained in the furnace, then the lance is lifted to a stop position, and the adjusting valves are closed; and if the lance needs to be lifted out of the furnace mouth, the slag splashed on the mouth of the lance is checked and cleaned.

Embodiment 2: It is the same as Embodiment 1 except that the side blowing lance is manually conveyed and installed.

## Claims

1. A side blowing lance for a smelting furnace, **characterized in that** the side blowing lance comprises a gas collection cylinder, a combustible gas inlet, a combustible gas chamber, an oxygen or oxygen-enriched air inlet, an oxygen or oxygen-enriched air pipe, a combustible gas pipe, a compressed cooling air inlet, a compressed cooling air chamber, and a compressed cooling air pipe, wherein the gas collection cylinder comprises a combustible gas chamber and a compressed cooling air chamber therein; the combustible gas inlet, the oxygen or oxygen-enriched air inlet, and the compressed cooling air inlet are connected to the gas collection cylinder, the oxygen or oxygen-enriched air inlet is located at one end of the gas collection cylinder, and the combustible gas inlet and the compressed cooling air inlet are respectively connected at positions corresponding to the combustible gas chamber and the compressed cooling air chamber; the oxygen or oxygen-enriched air pipe extends inside the combustible gas pipe, the oxygen or oxygen-enriched air pipe and the combustible gas pipe both extend inside the compressed cooling air pipe, and a gap exists between every two of the pipes; the oxygen or oxygen-enriched air pipe extends through the gas collection cylinder and is connected to the gas collection cylinder at the oxygen or oxygen-enriched air inlet, and is in communication with the oxygen or oxygen-enriched air inlet; the combustible gas pipe extends through the gas collection cylinder and is connected to a partition between the combustible gas chamber and the compressed cooling air chamber; the compressed cooling air pipe is connected to a lowermost end of the gas collection cylinder; and an other end of the gas collection cylinder is an output end of the side blowing lance.

2. The side blowing lance for the smelting furnace according to claim 1, **characterized in that** the gas collection cylinder is a closed cylinder, the partition in the cylinder divides the cylinder into two chambers, i.e. the combustible gas chamber and the compressed cooling air chamber, and two ends of the cylinder and the partition are respectively provided with concentric through-holes with gradually increasing diameters; and the two chambers are each provided with an inlet hole.

3. The side blowing lance for the smelting furnace according to claim 1, **characterized in that** each of the oxygen or oxygen-enriched air pipe and the combustible gas pipe is provided with outlet grooves on an outer wall at an output end thereof.

4. The side blowing lance for the smelting furnace according to claim 1, **characterized in that** the outlet grooves are uniformly distributed radially on the outer wall and form a gas passage with an inner wall of a neighboring pipe, the outlet grooves each have a length of 200-400 mm, and the outlet grooves each have a rectangular, trapezoidal, or semicircular cross-section.

5. A method of using the side blowing lance for the smelting furnace according to claim 1, **characterized in that** the method of using the side blowing lance comprises the following steps:
(1) separately connecting an adjusting valve for the compressed cooling air inlet, an adjusting valve for the oxygen or oxygen-enriched air inlet, and an adjusting valve for the combustible gas inlet, placing the side blowing lance into a side blowing lance slot of the smelting furnace, and opening the adjusting valve for the compressed cooling air inlet;
(2) performing a slag splashing operation on the side blowing lance;
(3) inserting the slag-splashed side blowing lance into a slag bath, and adjusting an insertion depth of the side blowing lance to be 100-300 mm based on a slag layer thickness;
(4) automatically opening oxygen, natural gas, and compressed cooling air valves in turn, and performing adjustment to reach corresponding flow rates and pressures; and
(5) after single-furnace smelting is completed, lifting the side blowing lance outward through an automatic conveyor frame, and when a mouth of the side blowing lance reaches a furnace wall of the smelting furnace, closing the natural gas, oxygen, and compressed cooling air valves in turn, and removing the side blowing lance.

6. The method of using the side blowing lance for the smelting furnace according to claim 5, **characterized in that** in the step (2), the slag splashing operation is performed by: first, determining a height of a surface of the slag bath, inserting the side blowing lance from above a slag surface of the smelting furnace, opening the adjusting valve for the oxygen or oxygen-enriched air inlet on the side blowing lance to an opening of 20-30%, opening the adjusting valve for the combustible gas inlet to an opening of 20-30%, maintaining a slight negative pressure in a furnace chamber of the smelting furnace, then moving the side blowing lance to a position which is 20-200 mm above the slag bath, and keeping for at least 90s; directly injecting an air flow from the side blowing lance onto the surface of the slag bath to cause fine slag particles to be splashed in the smelting furnace, so that the fine slag particles are splashed onto a surface of the side blowing lance and after being cooled by the air flow from the side blowing lance, gradually form a layer of condensed slag on the surface of the side blowing lance; and repeating the process several times to complete the slag splashing operation on the side blowing lance, wherein the slag splashing operation performed on the side blowing lance is to form the layer of the condensed slag on the surface of the side blowing lance to protect the side blowing lance and ensure a safe operation of the side blowing lance during blowing and smelting.

7. The method of using the side blowing lance for the smelting furnace according to claim 5, **characterized in that** in the step (5), the pressures and flow rates of compressed cooling air, oxygen or oxygen-enriched air, and combustible gas in the side blowing lance are respectively adjusted through the adjusting valves to obtain an oxidation or a reduction atmosphere in different smelting phases, wherein the pressure of the compressed cooling air is 0.2-0.4 Mpa, the pressure of the oxygen or oxygen-enriched air is 0.2-0.3 Mpa, and the pressure of the combustible gas is 0.15-0.25 Mpa.

8. The method of using the side blowing lance for the smelting furnace according to claim 5, **characterized in that** in the step (6), the side blowing lance is lifted, the adjusting valve for the combustible gas inlet and the adjusting valve for the oxygen or oxygen-enriched air inlet are closed to an opening of 20-30%, and at this moment, a normal negative pressure is maintained in the smelting furnace, then the side blowing lance is lifted to a stop position, and the adjusting valve for the compressed cooling air inlet, the adjusting valve for the oxygen or oxygen-enriched air inlet, and the adjusting valve for the combustible gas inlet are closed; and if the side blowing lance needs to be lifted out of a mouth of the smelting furnace, the slag splashed on the mouth of the side blowing lance is checked and cleaned.

9. The method of using the side blowing lance for the smelting furnace according to claim 5, **characterized in that** an angle between the side blowing lance and the furnace wall of the smelting furnace is 30-70°.

10. The method of using the side blowing lance for the smelting furnace according to claim 5, **characterized in that** the side blowing lance slot is located at a height of 200-1500 mm from a slag surface of the smelting furnace.
